Europäisches Patentamt

European Patent Office

Office européen des brevets

(11) Veröffentlichungsnummer: **0 364 620**
**A1**

# EUROPÄISCHE PATENTANMELDUNG

(21) Anmeldenummer: 88117393.4

(22) Anmeldetag: 19.10.88

(51) Int. Cl.5: **F16D 65/12 , F16D 65/847**

(43) Veröffentlichungstag der Anmeldung:
25.04.90 Patentblatt 90/17

(84) Benannte Vertragsstaaten:
BE DE ES FR GB IT NL SE

(71) Anmelder: BUDERUS KUNDENGUSS GMBH
Sophienstrasse 52-54 Postfach 1220
D-6330 Wetzlar(DE)

(72) Erfinder: Keiner, Werner, Dipl.-Ing.
Sachsenweg 1
D-6330 Wetzlar(DE)

(74) Vertreter: Schieschke, Klaus, Dipl.-Ing. et al
Patentanwälte Dipl.-Ing. E. Eder Dipl.-Ing. K.
Schieschke Elisabethstrasse 34
D-8000 München 40(DE)

(54) Massive oder belüftete Bremsscheiben für Kraftfahrzeuge.

(57) Die Erfindung bezieht sich auf Bremsscheiben mit mindestens einem Bremsring 4, an welchen sich innenseitig ein aus Wandung 20 und Boden 22 bestehender Topf anschließt. Im Anschlußbereich 10 des Bremsringes 4 an die Wandung 20 des Topfes 1 ist ein wellenförmiger Übergang angebracht, der in axialer Richtung eine Dehnungsnut und in radialer Richtung eine Versteifung darstellt.

Fig.1

EP 0 364 620 A1

## Massive oder belüftete Bremsscheiben für Kraftfahrzeuge

Die Erfindung bezieht sich auf Bremsscheiben für ein Kraftfahrzeug mit mindestens einem Bremsring, an welchen sich innenseitig ein aus Wandung und Boden bestehender Topf anschließt. Diese Bremsscheiben sind massiv oder belüftet.

Als allgemein bekannter Stand der Technik finden für derartige Bremsenkörper beispielsweise entweder einteilige Gußkonstruktionen oder Stahlblechverbundkonstruktionen für derartige Bremsenkörper Anwendung. Diese Konstruktionen neigen bei sehr hoher thermischer Belastung der Bremsringe zu unerwünschten Deformationen. Es ergeben sich damit sogenannte Komfortmängel bei den Scheibenbremsen, wie beispielsweise Brummgeräusche, Lenkraddrehschwingungen, Pulsieren des Bremspedales oder Vibrieren der gesamten Karosserie. Man versuchte nun, einen Kompromiß zu schließen, welcher allerdings zu Lasten des Verschleißverhaltens ging (Literaturstelle "Automobil industrie 1/86, Seite 37, 38"). Allen diesen Bremsenkörpern ist gemeinsam, daß sie über Anschraubbohrungen im Flansch an die Nabe des jeweiligen Kraftfahrzeuges fest angeschraubt werden. Ab Übergang Flanschfläche zum Topfring bewegt sich hierbei die Bremsscheibe frei.

Die bekannten Bremsringe sind in einer steifen, rechtwinkligen Verbindung an den ringförmigen Topf angebunden. In den Übergang zwischen Topf und Bremsfläche werden hierbei Wärmenuten eingestochen, welche den Wärmefluß zum Topf und in die Flanschfläche durch den engen Querschnitt dämmen und die Schirmung (Auswinkelung der Bremsfläche zum Topf) beein flussen. Hierbei hat der Bremsring das Bestreben, bei thermischer Belastung sich auszudehnen, wohingegen er beim Erkalten wieder schrumpft.

Diese Bewegungen spielen sich je nach Konstruktion, im Millimeterbereich und darunter ab, d. h. die Bremsscheibe bleibt während des Betriebes zwischen Flansch und Topffläche in der Praxis nicht rechtwinklig, wodurch sich die vorgenannten unerwünschten Folgen ergeben. Der Übergang zwischen dem Topfboden und der Wandung wird damit zu einer Art Gelenk, welche diese Bewegungen auffangen muß. Je heißer hierbei die Bremsscheibe wird und je größer der Wärmefluß in dieses Gelenk eingeht, umso geringer wird die Widerstandskraft und entsprechend stärker die unerwünschte Auswinkelung. Bei zu niedriger Werkstoffestigkeit bzw. zu geringem Querschnitt und damit Widerstandsmoment geht hierbei das vorgenannte Gelenk zu Bruch. Dabei wurde in der Praxis festgestellt, daß die Belastung dieses Gelenks umso stärker ist, je flacher der damit verbundene Topf ist.

Der vorliegenden Erfindung liegt damit die Aufgabe zugrunde, einen Bremsenkörper nach dem Oberbegriff des Anspruchs 1 zu schaffen, welcher bei einfachem Aufbau die vorgenannten unerwünschten Definierungen vermeidet und das Komfortverhalten der jeweiligen Scheibenbremse verbessert.

Diese Aufgabe wird erfindungsgemäß dadurch gelöst, daß im Anschlußbereich des Bremsringes an die Wandung des Topfes eine Dehnungsnut angeordnet ist. Es wird damit eine Art zweites Gelenk geschaffen, in welchem sich definiert die Dehnung und Schrumpfung des Bremsringes nachvollziehen kann, ohne daß diese Deformationen und geometrischen Veränderungen dem Gesamtkörper mitteilen.

Hierbei liegt die Dehnungsnut in der Bremsringebene, ist in axialer Richtung wellenförmig ausgebildet und stellt gleich zeitig in radialer Richtung eine Versteifung dar, die die Torsionsbelastbarkeit erhöht.

In weiterer Ausgestaltung der Erfindung kann bei einem Bremsenkörper mit innen- oder auflenbelüfteter Scheibe die jeweilige, an die Wandung des Topfes anschließende Bremsringebene mit der Dehnungsnut versehen sein.

Die vorliegende Erfindung ist auch anwendbar bei einem Bremsenkörper mit doppelt belüfteter Scheibe und Rippenaufhängung, wobei hierbei erfindungsgemäß die Rippenaufhängung im Anschlußbereich an die Wandung des Topfes die Dehnungsnut aufweist.

Auch bei einer Stahlblechverbundkonstruktion ist die Erfindung einsetzbar, wobei der zwischen den Bremsringen liegende Flansch des Stahlblechtopfes mit der Dehnungsnut versehen ist, welche in den Flansch eingeprägt wurde.

Vorteilhafte Weiterbildungen ergeben sich aus den weiteren Unteransprüchen. Darüberhinaus besteht erfindungsgemäß die Möglichkeit, daß im Übergangsbereich zwischen dem Boden und der Wandung des Topfes die Wandung eine umlaufende Verstärkung aufweist, d. h. das vorgenannte erste Gelenk wird zusätzlich durch eine Wulst versteift, wodurch sich vorteilhafterweise eine Erhöhung des Widerstandsmomentes ergibt.

Mit der erfindungsgemäßen Konstruktion wird eine Auswinkelung des Topfes vermieden, wobei sich die Ausdehnung des Bremsringes in der Bremsebene abspielt.

Das erfindungsgemäße Prinzip läßt sich bei allen Bremsscheibenkonstruktionen anwenden, beispielsweise massive Bremsscheiben, innen- und außenbelüftete Bremsscheiben sowie bei Stahlblechverbundkonstruktionen, bei welchen die wellenförmige Nut in den Flansch eingeprägt wird.

Die Erfindung wird nachfolgend anhand von in der Zeichnung dargestellten Ausführungsbeispielen näher beschrieben. In der Zeichnung zeigen:

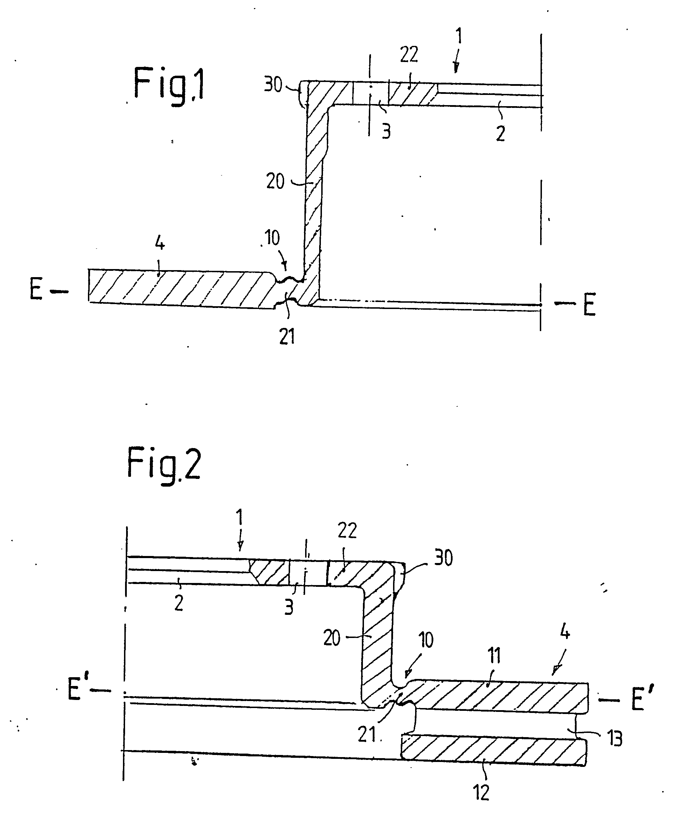

Fig. 1 bis 6 verschiedene Ausführungsformen der Erfindung im Schnitt.

Nach Fig. 1 weist ein nabenloser Bremsenkörper, insbesondere eine massive oder belüftete Bremsscheibe für eine Scheibenbremse eines Kraftfahrzeuges einen Bremsring 4 auf, an welchen sich innenseitig eine Wandung 20 anschließt, die in einen Boden 21 übergeht. Die Wandung 20 und der Boden 22 bilden hierbei einen Topf 11 mit einer Nabenbohrung 2 und einer Anzahl Anschlußbohrungen 3.

Im Anschlußbereich 10 des Bremsringes 4 ist an die Wandung 20 des Topfes 1 eine Dehnungsnut 21 eingeformt, welche wellenförmig ausgebildet ist. Es ergeben sich damit zwei Gelenke, nämlich einmal im Übergangsbereich zwischen dem Boden 22 und der Wandung 20 und zum anderen im rnbergangshereich zwischen der Wandung 20 und dem Bremsring 4 im Anschlußbereich 10. Hierbei kann das erstgenannte Gelenk durch eine umlaufende Wulst 30 versteift werden, um damit das Widerstandsmoment zu erhöhen. Durch das zweite Gelenk im Anschlußbereich 10, d. h. in der Bremsringebene E-E durch Schaffung einer Dehnungsnut 21 wird vorteilhafterweise eine Auswinkelung des Topfes 1 vermieden, wobei sich die vorgenannte Ausdehnung des Bremsringes 4 in der Bremsebene abspielt. Fig. 1 stellt hierbei einen massiven Bremsring 4 dar.

Nach Fig. 2 ist der Bremsring 4 durch zwei Scheiben 11 und 12 gebildet, zwischen welchen sich Rippen 13 befinden. Hierbei ist die Scheibe 11 im Anschlußbereich 10 an die Wandung 20 des Topfes 11 mit der Dehnungsnut 21 versehen. Es handelt sich bei dieser Konstruktion nach Fig. 2 um eine innenbelüftete Scheibe.

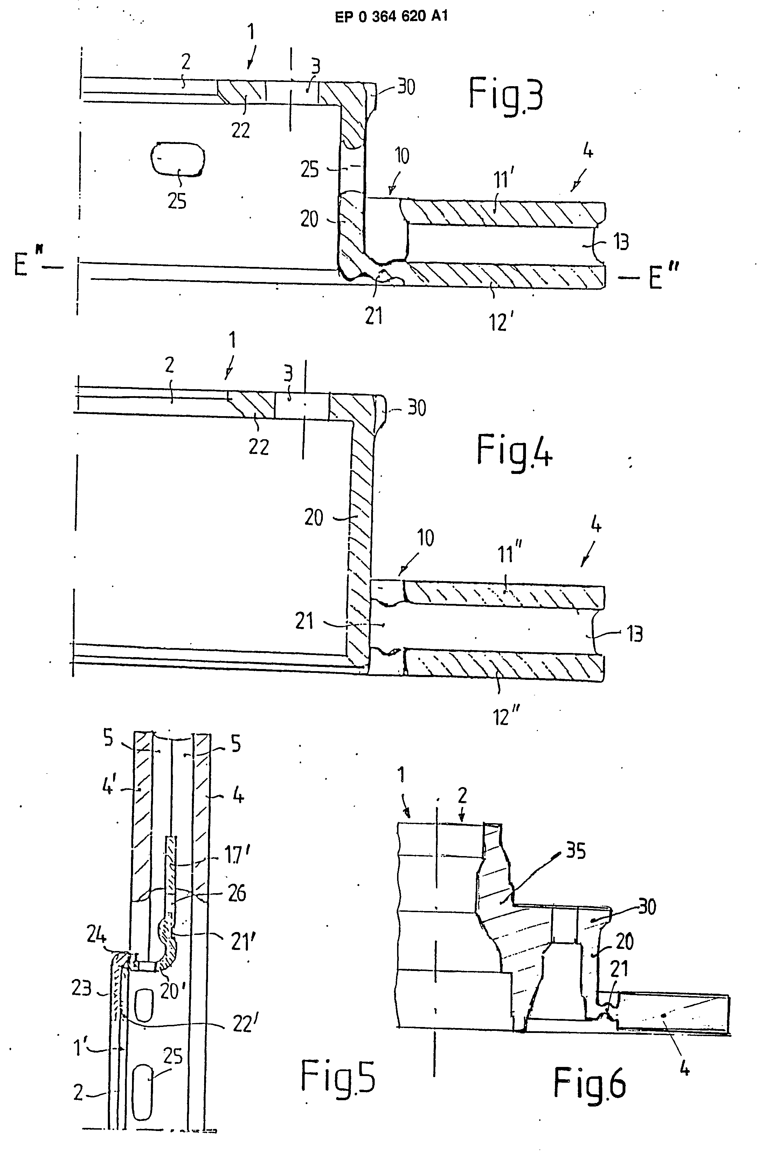

Die Ausführungsform nach Fig. 3 stellt einen Schnitt durch eine außenbelüftete Scheibe dar, wobei zwei Scheiben 11' und 12' durch Rippen 13 in Abstand voneinander gehalten werden und somit den Bremsring 4 darstellen. Bei dieser Ausführungsform befindet sich im Anschlußbereich 10 die Dehnungsnut 21 zwischen der Wandung 20 des Topfes 1 und der Scheibe 12' des Bremsringes 4. Hierbei kann die Wandung 20 außerdem mit in Abstand voneinander liegenden Kühllöchern 25 versehen sein.

Bei der Ausführungsform nach Fig. 4 handelt es sich um eine doppeltbelüftete Scheibe mit Rippenaufhängung. Hierbei finden zwei Scheiben 11' und 12' Anwendung, welche durch Rippen 13 in Abstand voneinander gehalten werden. Diese Rippen 13 sind im Anschlußbereich 10 über eine Rippenaufhängung in Form der Dehnungsnut 21 mit der Wandung 20 des Topfes 1 verbunden. Bei alien vorgenannten Ausführungsformen ist, wie nach Fig. 1, im Übergangsbereich zwischen dem Boden 22 und der Wandung 20 des Topfes I eine umlaufende Verstärkung 30 vorhanden.

Fig. 5 stellt eine weitere Ausführungsmöglichkeit des Bremsenkörpers dar, und zwar in Form einer Stahlblechverbundkonstruktion. Hierbei weist der Stahlblechtopf 1' im Anschlußbereich seines radialen Flansches 17' zur Wandung 20' die umlaufende Dehnnut 21' auf. Diese ist wiederum wellenförmig ausgebildet und befindet sich im nichteingelöteten Bereich des Flansches 17' zwischen den Bremsringen 4 und 4' und der Wandung 20' des Stahlblechtopfes.

Um den Stahlanteil innerhalb der Bremsringe zu reduzieren, wurden hierbei nach Fig. 5 die Rippen 5 zum größten Teil Guß auf Guß gelegt mit einer von der Scherbelastung her zu ver treten den Länge, beispielsweise weniger als ein Drittel der Rippenlänge. Wie ersichtlich, ist hier also die Breite des radialen Flansches 17' des Stahlblechtopfes 1' kleiner als die Breite der einander gegenüberliegenden Bremsringe 4 und 4'.

Benachbarte Flächen der Bremsringe 4 und 4', d.h. der Bremsringe 5, werden durch Hartlöten miteinander verbunden. Die Flächen, welche sich zwischen dem Flansch 17' und den zurückgesetzten Bereichen der Rippen 5 ergeben, sind ebenfalls durch Löten miteinander verbunden.

Der Bereich zwischen der Wandung 20' und dem Boden 22' des Stahlblechtopfes 1' kann zusätzlich durch einen aufgelöteten Versteifungstopf 23 bandagenähnlich versteift werden. In der darunterliegenden ringförmigen Partie des Stahlblechtopfes 1 werden Löcher gestanzt, um den Wärmefluß zur Nabenanschraubfläche zu unterbrechen, den anliegenden Bereich weniger aufzuheizen und eine weitere Gewichtseinsparung zu erzielen.

Der Boden 22' des Stahlblechtopfes 1' liegt generell an einer glatten Anschraubfläche der Nabe an; der eigentliche Anpreßdruckbereich liegt um die Anschraubbohrungen; die dazwischenliegenden Flächen können zur Gewichtseinsparung und zur besseren Druckverteilung Aussparungen aufweisen. Weiterhin kann die Wandung 20' des Stahlblechtopfes gestanzte Kühllöcher 25 besitzen, wobei auch die Möglichkeit besteht, daß der Flansch 17' weitere Kühllöcher 26 besitzt. Der Versteifungstopf 21' kann einen zur Wandung 20' des Stahlblechtopfes 1' herumgezogenen Flansch 24 aufweisen und durch Löten mit dem Stahlblechtopf 1' verbunden sein.

Figur 6 zeigt eine weitere Ausführungsform der Erfindung, wobei es sich hierbei um eine Bremsscheibe 1 mit Nabe 35 handelt. Diese Bremsscheibe 1 weist wiederum eine Verstärkungswulst 30 im Bereich der Wandung 20 auf, wobei ebenfalls eine Dehnungsnut 21 zwischen dem Bremsring 4 und der Wandung 20 vorhanden ist. Damit läßt sich die erfindungsgemäße Konstruktion mit allen ihren Vorteilen auch bei einer Bremsscheibe mit Nabe einsetzen.

Durch die besondere Konstruktion des Bremsenkörpers mit der Dehnungsnut 21 bzw. 21′ ergibt sich der Vorteil, daß eine unerwünschte Auswinkelung des Topfes 1 bzw. 1′ einwandfrei vermieden und auf einfache Weise die Reibwertstabilität sowie das Verschleiß- und Komfortverhalten erheblich verbessert wird.

**Ansprüche**

1. Bremsscheibe für Kraftfahrzeuge mit mindestens einem Bremsring, an welchem sich innenseitig ein aus Wandung und Boden bestehender Topf anschließt, dadurch gekennzeichnet, daß im Anschlußbereich (10) des Bremsringes (4, 4′) an die Wandung (20, 20′) des Topfes (1, 1′) eine Dehnungsnut (21, 21′) angeordnet ist.

2. Bremsscheibe nach Anspruch 1, dadurch gekennzeichnet, daß die Dehnungsnut (21, 21′) in der Bremsringebene (E-E; E′-E′; E″-E″) liegt.

3. Bremsscheibe nach Anspruch 1 und 2, dadurch gekennzeichnet, daß die Dehnungsnut (21, 21′) wellenförmig ausgebildet ist.

4. Bremsscheibe nach einem der vorhergehenden Ansprüche, mit innen- oder außenbelüfteter Scheibe, dadurch gekennzeichnet, dab die jeweilige an die Wandung (20) des Topfes (1) anschließende Bremsringebene (E′-E′; E″-E″) mit der Dehnungsnut (21) versehen ist.

5. Bremsscheibe nach einem der Ansprüche 1 bis 3, mit doppelt belüfteter Scheibe und Rippenaufhängung, dadurch gekennzeichnet, daß die Rippenaufhängung im Anschlußbereich an die Wandung (20) des Topfes (1) die Dehnungsnut (21) aufweist.

6. Bremsscheibe nach einem der Ansprüche 1 bis 3, in Stahlblechverbundkonstruktion, dadurch gekennzeichnet, daß der zwischen den Bremsringen (4, 4′) liegende Flansch (17) des Stahlblechtopfes (1′) mit der Dehnungsnut (21′) versehen ist.

7. Bremsscheibe nach Anspruch 6, dadurch gekennzeichnet, daß die Dehnungsnut (21′) in den Flansch (17′) eingeprägt ist.

8. Bremsscheibe nach Anspruch 6 und 7, dadurch gekennzeichnet, daß die Breite des radialen Flansches (17′) des Stahlblechtopfes (1′) kleiner als die Breite der einander gegenüberliegenden Bremsringe (4, 4′) ist, wobei benachbarte Flächen der Bremsringe (4, 4′) einerseits und des Flansches (17′) und der Bremsringe (4, 4′) andererseits durch Löten miteinander verbunden sind und wobei der Stahlblechtopf (1′) im Anschlußbereich des radialen Flansches (17′) zur Wandung (20′) die umlaufende Dehnnut (21′) aufweist.

9. Bremsscheibe nach den Ansprüchen 6 bis 8, dadurch gekennzeichnet, daß der Boden (22′) des Stahlblechtopfes (1′) mit einem Versteifungstopf (23) verbunden ist.

10. Bremsscheibe nach Anspruch 9, dadurch gekennzeichnet, daß der Versteifungstopf (21) einen zur Wandung (20′) des Stahlblechtopfes (1′) herumgezogenen Flansch (24) aufweist und durch Löten mit dem Stahlblechtopf (1′) verbunden ist.

11. Bremsscheibe nach einem der vorhergehenden Ansprüche, dadurch gekennzeichnet, daß im Übergangsbereich zwischen dem Boden (22) und der Wandung (20) des Topfes (1) die Wandung (20) eine umlaufende Verstärkung (30) aufweist.

Fig.1

Fig.2

Fig.3

Fig.4

Fig.5

Fig.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | DE-A-1 450 145 (GIRLING LTD) <br> * Figuren 1-4 * <br> --- | 1 | F 16 D 65/12 <br> F 16 D 65/847 |
| A | DE-B-1 211 041 (ALFRED TEVES MASCHINEN- UND ARMATURENBAU) <br> * Das ganze Dokument * <br> --- | 1 | |
| A | US-A-3 623 579 (P.G. HENDRICKSON) <br> * Spalte 2, Zeilen 20-23; Figur 1 * <br> --- | 1 | |
| A | DE-A-2 728 335 (PONT-A-MOUSSON) <br> * Figur 2 * <br> --- | 1 | |
| A | DE-B-1 179 239 (KNORR-BREMSE GmbH) <br> * Figur 4 * <br> --- | 1 | |
| A | US-A-2 215 420 (C.L. EKSERGIAN) <br> * Figuren 1,3 * <br> --- | 1 | |
| A | US-A-2 243 334 (C.L. EKSERGIAN) <br> * Figur 2 * <br> --- | 1 | RECHERCHIERTE SACHGEBIETE (Int. Cl.3) |
| A | GB-A-1 079 081 (GIRLING LTD) <br> * Figur 2 * <br> --- | 1 | F 16 D 65/00 |
| A | US-A-2 959 253 (R.W. GOODE) <br> * Figur 4 * <br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 12-06-1989 | BRAEMS C.G.I. |

EPO FORM 1503 03.82 (P0403)